(19) Europäisches Patentamt
European Patent Office
Office européen des brevets

(11) EP 4 800 507 A1

(12) **EUROPEAN PATENT APPLICATION**

(43) Date of publication:
**02.09.2026 Bulletin 2026/36**

(21) Application number: **26156863.8**

(22) Date of filing: **06.02.2026**

(51) International Patent Classification (IPC):
***G05D 1/227*** *(2024.01)* ***G05D 107/13*** *(2024.01)*
***G05D 109/20*** *(2024.01)* ***G08G 5/55*** *(2025.01)*

(52) Cooperative Patent Classification (CPC):
**G05D 1/2272; G05D 1/227; G08G 5/21; G08G 5/22; G08G 5/26; G08G 5/53; G08G 5/55; G08G 5/57; G08G 5/58; G08G 5/723; G08G 5/727; G08G 5/80;** G05D 2107/13; G05D 2109/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.02.2025 US 202519067462**

(71) Applicant: **The Boeing Company**
**Arlington, VA 22202 (US)**

(72) Inventors:
- **WILLIAMS, Brendan Patrick**
**Arlington, 22202 (US)**
- **COX, Kelly Maree**
**Arlington, 22202 (US)**
- **QUAGLIATINI, Damian**
**Arlington, 22202 (US)**
- **MCDONALD, Casey**
**Arlington, 22202 (US)**
- **CLOTHIER, Reece Alexander**
**Arlington, 22202 (US)**
- **LAMBETH, Daniel Hamish**
**Arlington, 22202 (US)**
- **CORNISH, Lionel Bruce**
**Arlington, 22202 (US)**

(74) Representative: **Boult Wade Tennant LLP**
**Salisbury Square House**
**8 Salisbury Square**
**London EC4Y 8AP (GB)**

# (54) UNCREWED VEHICLE AUTONOMY MODE MANAGEMENT

(57) Techniques for automatically implementing a mode of autonomy for an uncrewed vehicle and a remote controller include:
- obtaining contextual input data regarding the uncrewed vehicle; predicting future statuses of operational parameters for the uncrewed vehicle, where the operational parameters are in a plurality of operational categories;
- determining a future mode of autonomy for a function that allocates authority over the function between the uncrewed vehicle and the remote controller, where the determining is based on the future statuses of the operational parameters, and wherein the future mode of autonomy is for a time corresponding to the future statuses of the operational parameters
- implementing the future mode of autonomy for the function, where the future mode of autonomy allocates a level of control for the function, and allocates a level of override authority for the function
- executing, in accordance with the implementing, the function.

110
106
REQUIREMENTS DATABASE
107
MODE OF AUTONOMY SELECTION TABLE
164
166
105
104
153
OTHER CONTEXTUAL INPUT DATA SOURCES
108
SYSTEM AND ENVIRONMENT MONITOR
161
DECISION ENGINE
168
151
152
102
101
101
103
100

FIG. 1

EP 4 800 507 A1

## Description

### Field

This disclosure relates generally to uncrewed vehicles, such as autonomous and semi-autonomous aircraft.

### Background

Autonomous and semi-autonomous systems may have the capability of performing certain functions by the machine itself, while being supervised and operated by a remotely situated human. Uncrewed aircraft, for example, may be controlled by pilots or automated processes situated remotely at ground control stations or remote pilot stations (collectively referred to herein as "ground pilot stations"). In general, control over various uncrewed aircraft functions can be with either the aircraft (e.g., the functions are performed autonomously) or with the ground pilot station (e.g., a human and/or process at the ground pilot station remotely controls the uncrewed aircraft functions). Some functions, which may be optionally performed by the ground pilot stations, may instead be directed by the ground pilot station to be autonomously performed by the uncrewed aircraft. For example, for collision avoidance, instead of a remote pilot observing and controlling the semi-autonomous aircraft to avoid an airborne obstacle, the remote pilot may authorize the uncrewed aircraft to be controlled by its onboard Detect And Avoid ("DAA") system.

### Summary

There is described herein a method of automatically implementing a mode of autonomy for an uncrewed vehicle and a remote controller is presented. The method includes: obtaining contextual input data regarding the uncrewed vehicle; predicting, based on the contextual input data, future statuses of a plurality of operational parameters for the uncrewed vehicle, wherein the plurality of operational parameters for the uncrewed vehicle are in a plurality of operational categories; determining a future mode of autonomy for a function, wherein the future mode of autonomy allocates authority over the function between the uncrewed vehicle and the remote controller, wherein the determining is based at least on the future statuses of the plurality of operational parameters of the uncrewed vehicle, and wherein the future mode of autonomy is for a time corresponding to the future statuses of the plurality of operational parameters of the uncrewed vehicle; implementing the future mode of autonomy for the function, wherein the future mode of autonomy: allocates a level of control for the function, and allocates a level of override authority for the function; and executing, in accordance with the implementing, the function.

Various optional features of the above method examples include the following. The uncrewed vehicle may be an aircraft, and the executing may be performed by the aircraft. The determining may include selecting a level of control for the function from among: supported, instructed, approved, monitored, on call, regulated, self-optimizing, self-directed, self-determining, and sovereign. The determining may include selecting a level of override authority from among: unilateral, negotiated, suggestive, and none. The contextual input data regarding the uncrewed vehicle may include: sensor data from sensors on board the uncrewed vehicle; environmental information regarding an area of operation of the uncrewed vehicle; and human status data regarding the remote controller. The human status data regarding the remote controller may include eye tracking data regarding a human controller. The plurality of operational categories may include: uncrewed vehicle health, human controller status, mission performance, and environmental status. The determining a future mode of autonomy for a function may include determining respective future modes of autonomy for a plurality of functions, and the implementing the future mode of autonomy for the function may include implementing the respective future modes of autonomy for the plurality of functions simultaneously or substantially simultaneously. The determining may be further based on operational risk, mission performance, and regulatory requirements. The method may include, after the executing, automatically reverting to a prior mode of autonomy for the at least one function.

There is described herein a system for automatically implementing a mode of autonomy for an uncrewed vehicle and a remote controller is presented. The system includes: a non-transitory computer readable medium comprising instructions; and at least one electronic processor that executes the instructions to perform operations comprising: obtaining contextual input data regarding the uncrewed vehicle; predicting, based on the contextual input data, future statuses of a plurality of operational parameters for the uncrewed vehicle, wherein the plurality of operational parameters for the uncrewed vehicle are in a plurality of operational categories; determining a future mode of autonomy for a function, wherein the future mode of autonomy allocates authority over the function between the uncrewed vehicle and the remote controller, wherein the determining is based at least on the future statuses of the plurality of operational parameters of the uncrewed vehicle, and wherein the future mode of autonomy is for a time corresponding to the future statuses of the plurality of operational parameters of the uncrewed vehicle; implementing the future mode of autonomy for the function, wherein the future mode of autonomy: allocates a level of control for the function, and allocates a level of override authority for the function; and executing, in accordance with the implementing, the function.

Various optional features of the above system examples include the following. The uncrewed vehicle may be an aircraft, and the executing may be performed by an electronic processor on board the aircraft. The determining may include selecting a level of control for the function from among: supported, instructed, approved, monitored, on call, regulated, self-optimizing, self-directed, self-determining, and sovereign. The determining may include selecting a level of override authority from among: unilateral, negotiated, suggestive, and none. The contextual input data regarding the uncrewed vehicle may include: sensor data from sensors on board the uncrewed vehicle; environmental information regarding an area of operation of the uncrewed vehicle; and human status data regarding the remote controller. The human status data regarding the remote controller may include eye tracking data regarding a human controller. The plurality of operational categories may include: uncrewed vehicle health, human controller status, mission performance, and environmental status. The determining a future mode of autonomy for a function may include determining respective future modes of autonomy for a plurality of functions, and the implementing the future mode of autonomy for the function may include implementing the respective future modes of autonomy for the plurality of functions simultaneously or substantially simultaneously. The determining may be further based on operational risk, mission performance, and regulatory requirements. The operations may further include, after the executing, automatically reverting to a prior mode of autonomy for the at least one function.

Combinations, (including multiple dependent combinations) of the above-described elements and those within the specification have been contemplated by the inventors and may be made, except where otherwise indicated or where contradictory.

## Brief Description of the Drawings

Various features of the examples can be more fully appreciated, as the same become better understood with reference to the following detailed description of the examples when considered in connection with the accompanying figures, in which:

Fig. 1 is a schematic diagram of a system for implementing a mode of autonomy for an uncrewed vehicle and a remote controller;

Fig. 2 is a flow diagram for a method of automatically implementing a mode of autonomy for an uncrewed vehicle and a remote controller; and

Fig. 3 is a schematic diagram showing uncrewed aircraft computer hardware and ground pilot station computer hardware examples.

## Description of the Examples

Reference will now be made in detail to examples, illustrated in the accompanying drawings. Wherever convenient, the same reference numbers will be used throughout the drawings to refer to the same or like parts. In the following description, reference is made to the accompanying drawings that form a part thereof, and in which is shown by way of illustration specific examples. These examples are described in sufficient detail to enable those skilled in the art to practice the disclosure and it is to be understood that other examples may be utilized and that changes may be made without departing from the scope of the claims. The following description is, therefore, merely exemplary.

As autonomous systems become more advanced in ability, complex in implementation, and ubiquitous in application, there is a need to ensure the human and machine interact appropriately and efficiently. For example, the machine and its human controller may interact to not only ensure that minimum requirements in relation to the execution of a function are met, but also achieve desired outcomes.

However, interaction between human and machine is dynamic, rendering a one-size-fits-all approach inappropriate. For example, the human may fatigue, the machine may wear out, and both the human and the machine may commit errors. Moreover, either the human or the machine may be optimal for different tasks at different times. For example, the machine may be better at a given task in clear conditions with time criticality, but the human may be better at the same task in the presence of suboptimal environmental conditions (e.g., poor weather, high traffic, etc.).

Autonomy mode management ensures that at any point in time it is clear, articulated, and unambiguous as to who, human or machine (in some examples, which human and which machine), has the authority, the responsibility, and any authority to override. This is with respect to a system, sub-system, function, or groups of systems, sub-systems, or functions.

Accordingly, some examples monitor, predict, and adapt the mode of autonomy utilized by a semi-autonomous system, e.g., including an uncrewed aircraft, to ensure performance and compliance across all operational phases and conditions. Some examples provide a system for, and method of, independent mode of autonomy management. Some examples monitor and assess the performance of both an uncrewed aircraft and the human at the ground pilot station, as well as external factors such as environmental conditions, to generate warnings/alerts and guidance/commands that

change the mode of autonomy so as to support both mission performance and safety/regulatory requirements.

According to various examples, modes of autonomy are not limited to the binary categories of fully autonomous versus manually controlled. Some examples provide for various modes of autonomy that are categorical, rather than ordered. For example, a mode of autonomy may encompass several independent components. According to various examples, each mode of autonomy may be multidimensional and embrace a specified function, a level of control over the function, and a level of override authority regarding the control over the function. Thus, some examples assign modes of autonomy that do not correspond to simple linearly-ordered levels of autonomy.

According to various examples, a mode of autonomy may not be limited to a particular system, sub-system, or function, but can be applied and applicable to systems, sub-systems, individual functions, or groups of systems, sub-systems, or functions.

Some examples select and implement different modes of autonomy by not only selecting one or more functions over which authority is allocated between an uncrewed aircraft and a remote controller at a ground pilot station, but also allocating both a level of control for the function and an override authority level for the selected function(s).

Some examples provide a system for, and method of, selecting and implementing an appropriate mode of autonomy based on current and future predicted system states regarding a semi-autonomous vehicle, such as an uncrewed aircraft. According to some examples, the appropriate mode of autonomy is selected based on one or more of:

- technical data (e.g., vehicle energy reserves, vehicle or remote controller system failures)
- human controller status (e.g., predicted or measured human task load or workload)
- mission performance data (e.g., priorities, time constraints)
- regulatory requirements (e.g., airspace changes)
- environmental factors (e.g., known and predicted wind conditions, communication link performance models, other aircraft, weather, etc.)

Some examples accept various inputs (e.g., system state data, environmental information), model future statuses of certain operational parameters (e.g., predicted vehicle-controller link status, overload of human pilot, likely traffic, weather), select an appropriate mode of autonomy for at least one function that satisfies safety and regulatory criteria requirements, while balancing other mission objectives, and present, suggest, and/or implement the selected mode of autonomy.

In particular, some examples are anticipatory, at least in the sense that they predict future statuses of operational parameters and present, suggest, and/or implement a new mode of autonomy in advance of changes to the operational parameters that would render the current mode of autonomy less preferable by comparison.

These and other features and advantages are shown and described herein in reference to the accompanying figures.

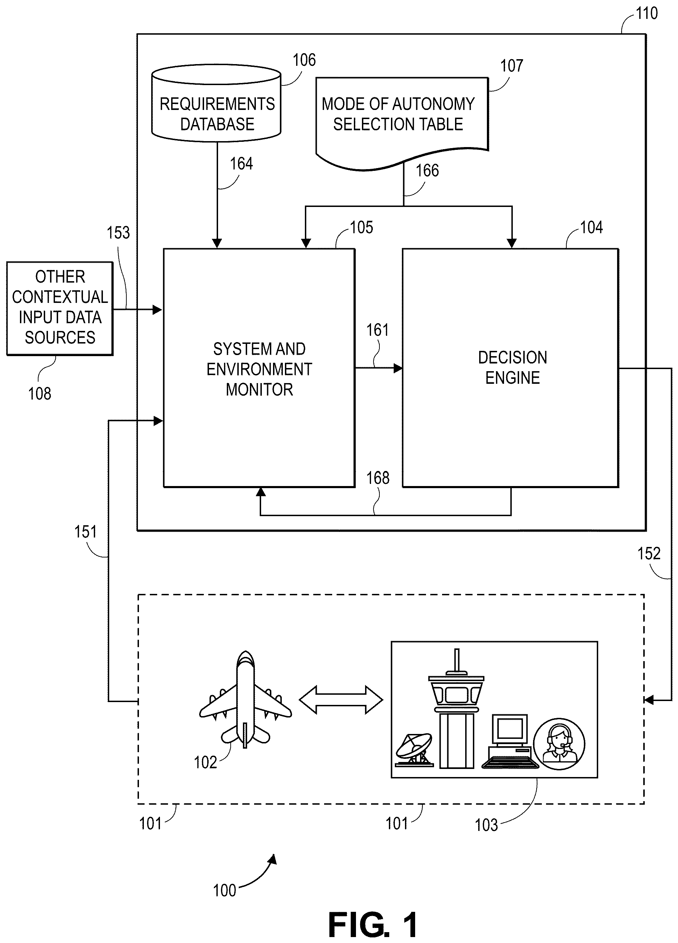

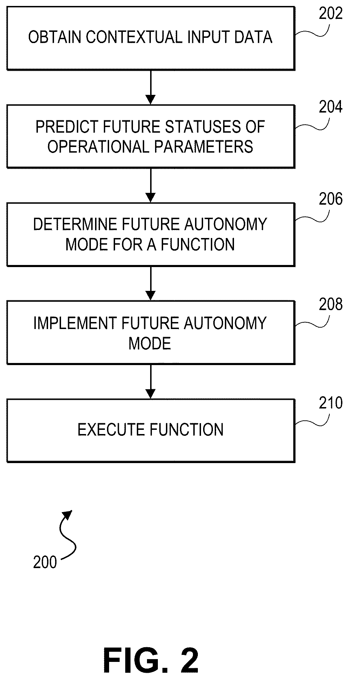

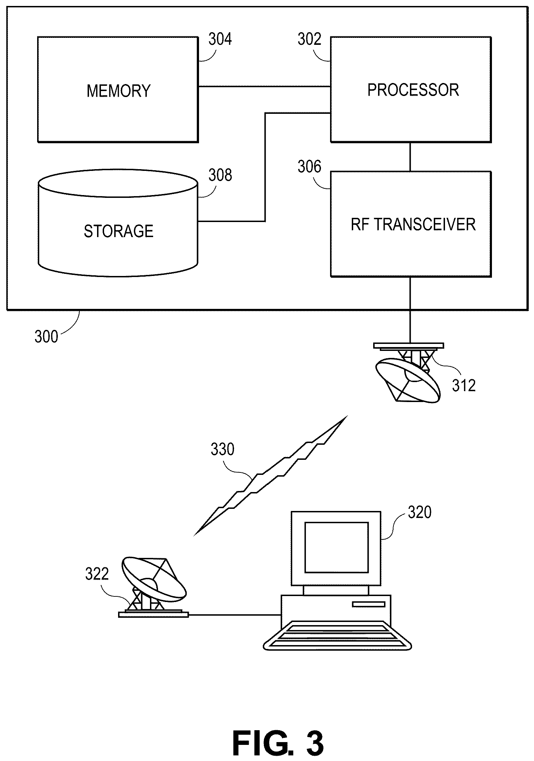

Fig. 1 is a schematic diagram of a system 100 that automatically implements a mode of autonomy for an uncrewed vehicle and a remote controller 103, according to various examples. By way of non-limiting example, the uncrewed vehicle is described herein in reference to an uncrewed aircraft 102. The system 100 includes an autonomy mode management system 110, which implements various modes of autonomy with respect to an autonomous or semi-autonomous system 101. The autonomous or semi-autonomous system 101 includes both an uncrewed aircraft 102 (by way of non-limiting example) and a remote controller 103. The autonomy mode management system 110 may implement a method as shown and described herein in reference to Fig. 2. The system 100 may be implemented using hardware as shown and described herein in reference to Fig. 3.

The uncrewed aircraft 102 may be a semi-autonomous aircraft, for example. By way of non-limiting example, the uncrewed aircraft 102 may be an electric vertical takeoff and landing (eVTOL) aircraft (e.g., an Advanced Air Mobility (AAM) aircraft), a powered lift aircraft, a fixed-wing aircraft, a rotary-wing aircraft, of a different type of aircraft.

The remote controller 103 may be a ground pilot station, according to various examples. For example, the remote controller 103 may be a Ground Control Station (GCS) or Remote Pilot Station (RPS). In general, the remote controller 103 is remotely-located from the uncrewed aircraft 102. The remote controller 103 may house a pilot and/or one or more computers capable of directing or allocating control authority over at least some functions of the uncrewed aircraft 102.

The semi-autonomous system 101 includes at least one wireless data link between the uncrewed aircraft 102 and the remote controller 103. The data link may be a command and control (C2) radio frequency communication channel, for example. The data link may convey data between computer systems only, e.g., the data link may not convey voice communications between people.

The autonomous or semi-autonomous system 101 provides system inputs 151 to the system and environment monitor 105. The system inputs 151 may generally include contextual data regarding the uncrewed aircraft 102 and may be provided continuously in real time. Various non-limiting examples of system inputs 151 are disclosed presently.

The system inputs 151 may include identification of a current mode of autonomy and/or configuration of the autonomous or semi-autonomous system 101.

The system inputs 151 may include functional / task performance status data, e.g., how well the autonomous or semi-autonomous system 101 meets or is meeting an intended goal, a deviation from the goal, etc.

The system inputs 151 may include health status information regarding one or more systems of the uncrewed aircraft 102, error indications, emergency conditions, etc. The health status information for a system of the uncrewed aircraft may include an indication of an operational status (e.g., operational, not operational, capacity level, etc.) of any of a variety of aircraft systems, including, by way of non-limiting example: battery (where the operational status is indicative of battery level), flight control actuator (where the operational status is indicative of whether the flight control actuator is fully functional, partially functional, not functional, predicted to be partially functional, or predicted to be not functional), or any of a variety of other systems (where the operational status is indicative of operational ability, overheating, etc.).

The system inputs 151 may include human performance data, such as human response data (e.g., response times), fatigue data (e.g., based on eye movement data), error rates, time-on-station, etc. A specific example of human performance data includes indications of human inattention. Indications of human inattention may include indicators of whether or not the remote controller 103 has issued any commands within a recent temporal window, and/or whether the remote controller 103 has issued a particular expected command during a recent temporal window.

The system inputs 151 may include intent / plan data, e.g., future performance requirements, trajectory/flight plan, upcoming tasks, etc.

The system inputs 151 may include phase of flight data for the uncrewed aircraft 102. The phase of flight data may include an indication of whether the uncrewed aircraft 102 is any of, by way of non-limiting example: on the ground, takeoff run, in terminal area, enroute, approach, above/below decision altitude, landing, etc.

The system inputs 151 may include data from sensors present in the uncrewed aircraft and/or the remote controller 103, including any, or a combination, of: temperature sensors, $CO_2$ sensors, CO sensors, etc.

The system inputs 151 may include data link information. Data link information may include characteristics of an actual or predicted compromised data link, such as, by way of non-limiting example, any, or a combination, of: a duration of the actual or predicted compromised data link, a periodicity of the actual or predicted compromised data link, whether the actual or predicted compromised data link is intermittent or continuous, whether a carrier signal is present or absent (with limited or no data exchanged), whether alternative communications bearers are available, and/or whether fading of the actual or predicted compromised data link is continuous, intermittent, or periodic.

The above examples of system inputs 151 are non-limiting; various examples may utilize any combination thereof, or other types of inputs reflecting contextual data for the uncrewed aircraft, which may include data regarding the overall autonomous or semi-autonomous system 101.

The autonomous or semi-autonomous system 101 obtains mode of autonomy outputs 152 from the autonomy mode management system 110. Examples of mode of autonomy outputs 152 from the autonomy mode management system include the following: a warning or alert of conditions suggesting the need to change the mode of autonomy (which may be implemented by the uncrewed aircraft 102 and/or the remote controller 103), a suggested change in mode of autonomy and associated timing or criticality for action of change (which may be implemented by the uncrewed aircraft 102 and/or the remote controller 103), or a commanded change in mode of autonomy (automatically or procedurally implemented by the uncrewed aircraft 102 and/or the remote controller 103).

In addition to the system inputs 151, the system and environment monitor 105 may also receive environmental inputs 153 from outside sources 108. The environmental inputs 153 may be indicative of the state of the environment that could impact the performance of the autonomous or semi-autonomous system 101, such as weather alerts, local air traffic, changes to runway conditions, delays, etc. The outside sources 108 may include connections to other databases, such as weather servers, traffic surveillance systems, etc.

The system & environment monitor 105 may be implemented using computer hardware and software as shown and described herein in reference to Fig. 3, for example. The system & environment monitor 105 may include simple logic testing, or more advanced state estimation, e.g., using stochastic filters or artificial intelligence, to perform the following actions. The system & environment monitor 105 receives system inputs 151 and environmental inputs 153 and processes them to assess performance against requirements as retrieved from the requirements database 106. The system & environment monitor 105 may process the system inputs 151 and environmental inputs 153 relative to each of a plurality of different relevant modes of autonomy 166 to assess performance against the requirements 164. The relevant modes of autonomy 166 may include all, or a subset, of the modes of autonomy defined in and retrieved from the mode of autonomy selection table 107. The system & environment monitor 105 may use the system inputs 151 and environmental inputs 153, possibly together with historical performance assessments, to predict future system performance for each relevant mode of autonomy. For example, the system & environment monitor 105 may include various models that predict future statuses of various operational parameters, e.g., predicted vehicle-controller link status, overload of human pilot, likely traffic, weather, etc. The system & environment monitor 105 provides its assessment outputs 161 representing its current and/or future performance assessments for the different relevant modes of autonomy to the decision engine 104.

The requirements database 106 provides requirements 164, which can be hard coded or dynamically uploaded as part of the mission/flight plan. The requirements 164 typically reflect legislative and/or company operating require-

ments. For example, certain legs of a flight plan must be flown in a certain mode of autonomy to meet regulatory safety requirements, e.g., final approach may be required to be performed by the remote controller 103.

The mode of autonomy selection table 107 is an electronically stored pre-defined table of modes of autonomy that define levels of control and levels of override authority for the execution of particular functions. Thus, according to various examples, a mode of autonomy embraces selections from each of the following three components: one or more specified functions, a level of control, and a level of override authority. Each of these components is described in detail presently.

First, a mode of autonomy may be defined with respect to one or more specified functions. This aspect is understood to refer to the actual capabilities at issue, e.g., the specific actions, tasks, activities, and/or sensor activations for which control may be delegated between the uncrewed aircraft and the ground pilot station. Non-limiting examples of functions in the context of modes of autonomy include: a take off process, acquiring sensor data, a hard geofence, a soft geofence, an onboard detect and avoidance process, an onboard terrain avoidance process, an onboard weather avoidance process, an onboard environmental control maneuver process, an onboard diversion process, an onboard emergency or precautionary landing process, establishing (without switching to) an alternate communication channel, establishing (without switching to) an alternate communication bearer, switching to an established alternate communication channel, switching to an established alternate communication bearer, a takeoff rejection process, a missed approach process, and/or an onboard risk reduction maneuver process.

Second, a mode of autonomy may be defined with respect to various levels of control. Control refers to the amount of ability an uncrewed aircraft has to perform a stated function. In the context of an uncrewed aircraft, a level of control may refer to a level of responsibility that the uncrewed aircraft has for performing a specified function. According to some examples, a level of control with respect to a function refers to an amount of self-governance with respect to executing the function. Levels of control may include the following.

- *Supported.* The ground pilot station has the ability to directly perform the function and in so doing, determine the behavior of the uncrewed aircraft. This level has four sub-levels.

    (1) Instructed. By default, the ground pilot station performs the function, but can delegate the function to the uncrewed aircraft. The ground pilot station typically actively maintains situational awareness.

    (2) Approved. By default, the uncrewed aircraft executes the function but can only proceed after the ground pilot station has approved the action. The ground pilot station is in-the-loop and can modify or reject action. The ground pilot station can still assume function execution if desired.

    (3) Monitored. The uncrewed aircraft will proceed with the execution of a function unless the ground pilot station decides to intervene. The ground pilot station typically actively monitors the uncrewed aircraft in its execution of the function and only intervenes on exception. The ground pilot station may have a window of time (or set of conditions) in which it can intervene.

    (4) On Call. By default, the uncrewed aircraft will proceed with the execution of a function unless it has a fault or has a reason to call on the ground pilot station. The ground pilot station may be in-the-loop, but does not strictly need to actively maintain situation awareness of the uncrewed aircraft.

- *Regulated.* The ground pilot station cannot directly perform the function, but exercises control through the specification of boundaries and constraints, which determine the limits and limiting-relationships, respectively, on the execution of the function. The ground pilot station may not be able to directly execute the function.
- *Self-Optimizing.* The ground pilot station can direct the behavior of the uncrewed aircraft by defining/modifying the goals of the function. The ground pilot station is able to set or change the desired end state, but not how the uncrewed aircraft executes the function toward achieving it.
- *Self-Directed.* The ground pilot station can determine the boundaries and constraints on the setting of uncrewed aircraft goals (i.e., goal policies) but not the setting of the goals themselves.
- *Self-Determining.* The ground pilot station has the ability to indirectly influence uncrewed aircraft behavior through its interactions with the environment (inputs). One way communication may exist, where the ground pilot station is out-of-the-loop but can still observe uncrewed aircraft behavior. The ground pilot station may have no direct path to provide instructions to the machine in relation to the execution of the function. Rather, the ground pilot station may influence it through changes to the objects in the uncrewed aircraft's environment or through controlling the execution of other system functions that interaction with the uncrewed aircraft.
- *Sovereign.* The ground pilot station has no lines of control to influence the uncrewed aircraft's execution of the function. Interaction between the ground pilot station and the uncrewed aircraft with respect to execution of the function is not possible, e.g., due to the absence or failure of communications, display, and/or control interface elements.

Third, a mode of autonomy may be defined with respect to various levels of override authority. Override authority

refers to the ability an uncrewed aircraft to ignore or overrule an instruction from the ground pilot station with respect to a function. Levels of override authority may include the following.

- *Unilateral.* Authority rests entirely with the ground pilot station. The uncrewed aircraft must follow the command of the ground pilot station with respect to the function without question.
- *Negotiated.* The uncrewed aircraft is able to suggest alternatives or compromises in relation to a command with respect to the function made by the ground pilot station, but the ground pilot station has override authority.
- *Suggestive.* The uncrewed aircraft can negotiate (e.g., suggest alternatives or compromises) with the ground pilot station in relation to a command with respect to the function, but the uncrewed aircraft has override authority.
- *None.* The uncrewed aircraft has complete and unchallenged authority with respect to the function. It can accept, reject, or modify instructions from the ground pilot station with respect to the function as it sees fit.

Note that, for example, a single uncrewed aircraft may have different modes of autonomy for different functions. For example, an uncrewed aircraft may implement a mode of autonomy where the take off function is supported/instructed, and where the ground pilot station has complete override authority. At the same time, the same uncrewed aircraft may implement a mode of autonomy where the landing function is regulated, and where the ground pilot station has directed override authority.

The Example Autonomy Mode Table below summarizes the possible modes of autonomy for a function in terms of combinations of levels of control and override authority. Note that levels of control and override authority are independent. For example, each level of control may be implemented together with any level of override authority.

| | | | **Level of Override Authority** | | | |
|---|---|---|---|---|---|---|
| | | | **1** | **2** | **3** | **4** |
| | | | **Unilateral** | **Negotiated** | **Suggestive** | **None** |
| **Level of Control** | **A.** | **Supported** | A1 | A2 | A3 | A4 |
| | **i.** | **Instructed** | A(i)1 | A(i)2 | A(i)3 | A(i)4 |
| | **ii.** | **Approved** | A(ii)1 | A(ii)2 | A(ii)3 | A(ii)4 |
| | **iii.** | **Monitored** | A(iii)1 | A(iii)2 | A(iii)3 | A(iii)4 |
| | **iv.** | **On Call** | A(iv)1 | A(iv)2 | A(iv)3 | A(iv)4 |
| | **B.** | **Regulated** | B1 | B2 | B3 | B4 |
| | **C.** | **Self-Optimizing** | C1 | C2 | C3 | C4 |
| | **D.** | **Self-Directed** | D1 | D2 | D3 | D4 |
| | **E.** | **Self-Determining** | E1 | E2 | E3 | E4 |
| | **F.** | **Sovereign** | F1 | F2 | F3 | F4 |

**Example Autonomy Mode Table:** Summary of Modes of Autonomy for a Function

As is seen in the Example Autonomy Mode Table, the modes of autonomy are categorical or nominal, rather than linearly ranked. Thus, the example modes of autonomy do not describe *levels* of autonomy, *per se.* The mode of autonomy selection tables 107 may include a representation of the Table, according to some examples.

The decision engine 104 assesses whether a change in the mode of autonomy is needed (or required) and if so, which of the modes of autonomy should be recommended (or commanded). The assessment may include assessments of

the time required to act. The decision engine 104 provides its assessment to the to the autonomous or semi-autonomous system 101 as part of its mode of autonomy outputs 152. The decision engine 104 also provides feedback 168 to the system & environment monitor 105, e.g., representing a current recommended mode of autonomy.

The decision engine 104 may be implemented using computer hardware and software as shown and described herein in reference to Fig. 3, for example. The decision engine 104 may be implemented using simple logic conditions, or more advanced algorithms for making multi-criteria decisions under uncertainty, e.g., artificial intelligence. In general, the decision engine 104 processes the assessment outputs 161 received from the system and environment monitor 105, which represent current and/or future performance assessments for a plurality of modes of autonomy, and determines whether a mode of autonomy represented by the assessment outputs 161 is, or will be, preferable to the current mode of autonomy. If so, the decision engine 104 includes it in its mode of autonomy outputs 152 that it passes to the autonomous or semi-autonomous system 101. The decision engine 104 may perform these operations repeatedly, e.g., continuously, while the autonomous or semi-autonomous system 101 is deployed.

Fig. 2 is a flow diagram for a method 200 of automatically implementing a mode of autonomy for an uncrewed vehicle and a remote controller, according to various examples. The method 200 may be performed using a system such as is shown and described herein in reference to Fig. 1. For example, the uncrewed vehicle may be implemented as the uncrewed aircraft 102 of Fig. 1, and/or the remote controller may be implemented as the remote controller 103 of Fig. 1. As another example, the method 200 may be implemented by the autonomy mode management system 110 of Fig. 1. In general, the method 200 may be implemented using hardware and software as shown and described in reference to Fig. 3.

At 202, the method 200 includes obtaining contextual input data regarding the uncrewed vehicle. The contextual input data may include any, or any combination, of data from one or both of the system inputs 151 and/or the environmental inputs 153 as shown and described herein in reference to Fig. 1. For example, the contextual input data regarding the uncrewed vehicle may include sensor data from sensors on board the uncrewed vehicle, environmental information regarding an area of operation of the uncrewed vehicle, and human status data regarding the remote controller. According to some examples, the human status data regarding the remote controller may include eye tracking data regarding a human controller.

At 204, the method 200 includes predicting, based on the contextual input data, future statuses of multiple operational parameters for the uncrewed vehicle. The operational parameters for the uncrewed vehicle may be in a plurality of operational categories. According to some examples, the operational categories may include: uncrewed vehicle health, human controller status, mission performance, and environmental status. According to some examples, the actions of 204 may be performed by a system and environmental monitor, such as the system and environment monitor 105 as shown and described in reference to Fig. 1.

At 206, the method 200 includes determining a future mode of autonomy for a function. The function may be any function of the uncrewed vehicle as disclosed herein. The future mode of autonomy may allocate authority over the function between the uncrewed vehicle and the remote controller. The determination may be based at least on the future statuses of the plurality of operational parameters of the uncrewed vehicle from 204. The future mode of autonomy may be for a time corresponding to the future statuses of the operational parameters of the uncrewed vehicle. According to some examples, the actions of 206 may include selecting the future mode of autonomy from among possible modes of autonomy as represented in the Example Autonomy Mode Table. According to some examples, the actions of 206 may be further based on operational risk, mission performance, and regulatory requirements. According to some examples, the actions of 206 may be performed by a decision engine, such as the decision engine 104 as shown and described herein in reference to Fig. 1.

At 208, the method 200 includes implementing the future mode of autonomy for the function. The future mode of autonomy may allocate a level of control for the function, e.g., as summarized in the Example Autonomy Mode Table. The future mode of autonomy may allocate a level of override authority for the function, e.g., as summarized in the Example Autonomy Mode Table.

At 210, the method 200 includes executing, in accordance with the implementing, the function. According to examples where the uncrewed vehicle is an aircraft, and the execution of the function may be performed by the aircraft.

Many variations of the method 200 are possible. For example, according to some examples, the actions of 206 may include determining respective future modes of autonomy for multiple functions, and the actions of 208 may include implementing the respective future modes of autonomy for the functions simultaneously or substantially simultaneously. Herein, the term "substantially simultaneously" may include initiating the future modes of autonomy automatically by an electronic system without introducing any intentional delay.

As another example, the method may include, after the actions of 210, subsequently automatically reverting to a prior mode of autonomy for the at least one function. This reversion may occur after a planned temporal interval has elapsed, for example.

Examples may be used to monitor performance in a human pilot aircraft system, not limited to pilots situated in ground pilot stations (e.g., where the pilot is present in the aircraft). These examples may monitor the aircraft and pilot for degradation in performance (e.g., flight path deviation; system errors, warnings, or alerts; pilot fatigue, stress, or workload

measures; pilot incapacitation, etc.). The examples may generate warnings/alerts and/or suggestions/commands that change the mode of autonomy to achieve and/or maintain a desired level of performance.

Examples may be used to ensure compliance with regulatory and/or operational requirements. These examples may check a current mode of autonomy against regulatory and operational requirements for different phases of flight, flight plan segments, and procedures (e.g., instrument approach and departure procedures). The examples may generate warnings/alerts and/or suggestions/commands that change to mode of autonomy to satisfy mandated requirements (e.g., final approach must be manually flown by pilot).

Examples may be implemented in the context of air traffic control. These examples may be similar to any of the above examples, but may be used instead in the context of management of air traffic control sectors, separation, traffic flow sequencing, etc.

Examples may be implemented in the context of a remote piloted aircraft system. According to these examples, where a single human remote pilot supervises multiple uncrewed aircraft, the examples may monitor and generate warnings/alerts/guidance/commands to meet mission performance, safety, or regulatory requirements across the fleet and at the level of each individual uncrewed aircraft.

Note that examples may be used for future state of normal operations, rather than contingency management of abnormal, off nominal, or emergency operations. Accordingly, examples may be implemented together with contingency management techniques.

Note that, in general, examples may be applied to any human-machine-system where responsibilities, role, and authority can be modified to maintain performance, not limited to uncrewed aircraft. That is, although the present description is presented in the context of uncrewed aircraft for purposes of exposition, more generally, examples may be applied to industry/domain, e.g., vehicles, oversight of automated production systems, medical robotics, etc.

Fig. 3 is a schematic diagram showing uncrewed aircraft computer hardware 300 and ground pilot station computer hardware 320, according to various examples. In particular, Fig. 3 illustrates various hardware, software, and other resources that may be according to disclosed systems and methods. In examples as shown, the uncrewed aircraft computer hardware 300 may include one or more processors 302 coupled to random access memory 304 operating under control of or in conjunction with an operating system. The processors 302 in various examples may be included in one or more computers or hardware resources. The operating system may be, for example, a distribution of the LinuxTM operating system, the UnixTM operating system, or other open-source or proprietary operating system or platform. The processors 302 may, in general, be programmed or configured to execute control logic and control operations to implement methods disclosed herein. The processors 302 may communicate with data store 308, such as a database stored on a hard drive or drive array, to access or store program instructions other data, e.g., as shown and described in reference to Fig. 1.

The processors 302 may further communicate via one or more radio-frequency transceiver 306, which are coupled to one or more antennas 312, such that data (e.g., a query or instruction, etc.) may be sent from the uncrewed aircraft computer hardware 300 and received by the ground pilot station computer hardware 320. This provides one direction of the data communication channel 330 between the uncrewed aircraft computer hardware 300 and the ground pilot station computer hardware 320.

The ground pilot station computer hardware 320, which may include a computer system as shown and described herein in reference to the uncrewed aircraft computer hardware 300, is communicatively coupled to one or more antennas 322 by way of one or more radio-frequency transceivers, such that data (e.g., a query or instruction, etc.) may be sent from the ground pilot station computer hardware 320 and received by the uncrewed aircraft computer hardware 300. This provides another direction of the data communication channel 330 between the uncrewed aircraft computer hardware 300 and the ground pilot station computer hardware 320.

Other configurations of the uncrewed aircraft computer hardware 300 and ground pilot station computer hardware 320 are possible. For example, according to some examples, the ground pilot station computer hardware 320 may include or be communicatively coupled to a separate ground communication system or network (e.g., one or more satellite ground stations, a mobile and/or cellular network), and data may be made available to the ground pilot station computer hardware 320 via a network (e.g., internet) or point-to-point connection.

Examples are not limited to those expressly disclosed herein. Examples may include a plurality of autonomy mode managers in a hierarchy. According to such an example, a particular sub-system may have an autonomy mode manager for the associated functions, and the system that overarches that sub-system have also have an autonomy mode manager. Some examples may have multiple autonomy mode managers at different levels of system or functional abstraction. The interaction between the autonomy mode managers may be such as to ensure modes of autonomy are clear, articulated, unambiguous, consistent, and coordinated. In some examples the elements of the autonomous or semi-autonomous system 101 may consist of machines, with the autonomy mode management system 110 allocating a mode of autonomy between machines. Other examples may contain a plurality of machine to machine, and/or machine to human relationships.

Certain examples can be performed using a computer program or set of programs. The computer programs can

exist in a variety of forms both active and inactive. For example, the computer programs can exist as software program(s) comprised of program instructions in source code, object code, executable code or other formats; firmware program(s), or hardware description language (HDL) files. Any of the above can be embodied on a transitory or non-transitory computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), flash memory, and magnetic or optical disks or tapes.

Examples of the present disclosure are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented using computer readable program instructions that are executed by an electronic processor.

These computer readable program instructions may be provided to a processor of a general-purpose computer, special purpose computer, or other programmable data processing apparatus to produce a machine, such that the instructions, which execute via the electronic processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement features of the function/act specified in the flowchart and/or block diagram block or blocks.

In examples, the computer readable program instructions may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the C programming language or similar programming languages. The computer readable program instructions may execute entirely on a user's computer, partly on the user's computer, as a stand-alone software package, partly on the user's computer and partly on a remote computer or entirely on the remote computer or server.

Further examples are set out in the following clauses.

Clause 1. A system (100) for automatically implementing a mode of autonomy (166) for an uncrewed vehicle and a remote controller (103), the system (100) comprising: a non-transitory computer readable medium comprising instructions; and at least one electronic processor that executes the instructions to perform operations comprising: obtaining contextual input data regarding the uncrewed vehicle; predicting, based on the contextual input data, future statuses of a plurality of operational parameters for the uncrewed vehicle, wherein the plurality of operational parameters for the uncrewed vehicle are in a plurality of operational categories; determining a future mode of autonomy (166) for a function, wherein the future mode of autonomy (166) allocates authority over the function between the uncrewed vehicle and the remote controller (103), wherein the determining is based at least on the future statuses of the plurality of operational parameters of the uncrewed vehicle, and wherein the future mode of autonomy (166) is for a time corresponding to the future statuses of the plurality of operational parameters of the uncrewed vehicle; implementing the future mode of autonomy (166) for the function, wherein the future mode of autonomy (166): allocates a level of control for the function, and allocates a level of override authority for the function; and executing, in accordance with the implementing, the function.

Clause 2. The system (100) of clause 1, wherein the uncrewed vehicle is an aircraft (102), and wherein the executing is performed by an electronic processor on board the aircraft (102).

Clause 3. The system (100) of clause 1 or 2, wherein the determining comprises selecting a level of control for the function from among: supported, instructed, approved, monitored, on call, regulated, self-optimizing, self-directed, self-determining, and sovereign.

Clause 4. The system (100) of any of clauses 1 to 3, wherein the determining comprises selecting a level of override authority from among: unilateral, negotiated, suggestive, and none.

Clause 5. The system (100) of any of clauses 1 to 4, wherein the contextual input data regarding the uncrewed vehicle comprises: sensor data from sensors on board the uncrewed vehicle; environmental information regarding an area of operation of the uncrewed vehicle; and human status data regarding the remote controller (103).

Clause 6. The system (100) of clause 5, wherein the human status data regarding the remote controller (103) comprises eye tracking data regarding a human controller.

Clause 7. The system (100) of any of clauses 1 to 6, wherein the plurality of operational categories comprise: uncrewed vehicle health, human controller status, mission performance, and environmental status.

Clause 8. The system (100) of any of clauses 1 to 7, wherein the determining a future mode of autonomy (166) for

a function comprises determining respective future modes of autonomy (166) for a plurality of functions, and wherein the implementing the future mode of autonomy (166) for the function comprises implementing the respective future modes of autonomy (166) for the plurality of functions simultaneously or substantially simultaneously.

Clause 9. The system (100) of any of clauses 1 to 8, wherein the determining is further based on operational risk, mission performance, and regulatory requirements (164).

Clause 10. The system (100) of any of clauses 1 to 9, wherein the operations further comprise, after the executing, automatically reverting to a prior mode of autonomy (166) for the at least one function.

As used herein, the terms "A or B" and "A and/or B" are intended to encompass A, B, or {A and B}. Further, the terms "A, B, or C" and "A, B, and/or C" are intended to encompass single items, pairs of items, or all items, that is, all of: A, B, C, {A and B}, {A and C}, {B and C}, and {A and B and C}. The term "or" as used herein means "and/or."

As used herein, language such as "at least one of X, Y, and Z," "at least one of X, Y, or Z," "at least one or more of X, Y, and Z," "at least one or more of X, Y, or Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

The techniques presented and claimed herein are referenced and applied to material objects and concrete examples of a practical nature that demonstrably improve the present technical field and, as such, are not abstract, intangible or purely theoretical.

Those skilled in the art will be able to make various modifications to the described examples without departing from the scope of the claims. The terms and descriptions used herein are set forth by way of illustration only and are not meant as limitations. In particular, although the method has been described by examples, the steps of the method can be performed in a different order than illustrated or simultaneously. Those skilled in the art will recognize that these and other variations are possible within the scope as defined in the following claims.

## Claims

**1.** A method (200) of automatically implementing a mode of autonomy (166) for an uncrewed vehicle and a remote controller (103), the method (200) comprising:

obtaining contextual input data regarding the uncrewed vehicle;
predicting, based on the contextual input data, future statuses of a plurality of operational parameters for the uncrewed vehicle, wherein the plurality of operational parameters for the uncrewed vehicle are in a plurality of operational categories;
determining a future mode of autonomy (166) for a function, wherein the future mode of autonomy (166) allocates authority over the function between the uncrewed vehicle and the remote controller (103), wherein the determining is based at least on the future statuses of the plurality of operational parameters of the uncrewed vehicle, and wherein the future mode of autonomy (166) is for a time corresponding to the future statuses of the plurality of operational parameters of the uncrewed vehicle;
implementing the future mode of autonomy (166) for the function, wherein the future mode of autonomy (166): allocates a level of control for the function, and allocates a level of override authority for the function; and
executing, in accordance with the implementing, the function.

**2.** The method (200) of claim 1, wherein the uncrewed vehicle is an aircraft (102), and wherein the executing is performed by the aircraft (102).

**3.** The method (200) of claim 1 or 2, wherein the determining comprises selecting a level of control for the function from among: supported, instructed, approved, monitored, on call, regulated, self-optimizing, self-directed, self-determining, and sovereign.

**4.** The method (200) of any preceding claim, wherein the determining comprises selecting a level of override authority from among: unilateral, negotiated, suggestive, and none.

**5.** The method (200) of any preceding claim, wherein the contextual input data regarding the uncrewed vehicle comprises:

sensor data from sensors on board the uncrewed vehicle;
environmental information regarding an area of operation of the uncrewed vehicle; and

human status data regarding the remote controller (103).

**6.** The method (200) of claim 5, wherein the human status data regarding the remote controller (103) comprises eye tracking data regarding a human controller.

**7.** The method (200) of any preceding claim, wherein the plurality of operational categories comprise: uncrewed vehicle health, human controller status, mission performance, and environmental status.

**8.** The method (200) of any preceding claim,

wherein the determining a future mode of autonomy (166) for a function comprises determining respective future modes of autonomy (166) for a plurality of functions, and
wherein the implementing the future mode of autonomy (166) for the function comprises implementing the respective future modes of autonomy (166) for the plurality of functions simultaneously or substantially simultaneously.

**9.** The method (200) of any preceding claim, wherein the determining is further based on operational risk, mission performance, and regulatory requirements (164).

**10.** The method (200) of any preceding claim, further comprising, after the executing, automatically reverting to a prior mode of autonomy (166) for the function.

**11.** A system (100) for automatically implementing a mode of autonomy (166) for an uncrewed vehicle and a remote controller (103), the system (100) comprising: a non-transitory computer readable medium comprising instructions; and at least one electronic processor that executes the instructions to perform operations comprising:

obtaining contextual input data regarding the uncrewed vehicle;
predicting, based on the contextual input data, future statuses of a plurality of operational parameters for the uncrewed vehicle, wherein the plurality of operational parameters for the uncrewed vehicle are in a plurality of operational categories;
determining a future mode of autonomy (166) for a function, wherein the future mode of autonomy (166) allocates authority over the function between the uncrewed vehicle and the remote controller (103), wherein the determining is based at least on the future statuses of the plurality of operational parameters of the uncrewed vehicle, and wherein the future mode of autonomy (166) is for a time corresponding to the future statuses of the plurality of operational parameters of the uncrewed vehicle;
implementing the future mode of autonomy (166) for the function, wherein the future mode of autonomy (166): allocates a level of control for the function, and allocates a level of override authority for the function; and
executing, in accordance with the implementing, the function.

**12.** The system (100) of claim 11, wherein the uncrewed vehicle is an aircraft (102), and wherein the executing is performed by an electronic processor on board the aircraft (102).

**13.** The system (100) of claim 11 or 12, wherein the determining comprises:

selecting a level of control for the function from among: supported, instructed, approved, monitored, on call, regulated, self-optimizing, self-directed, self-determining, and sovereign; and/or
selecting a level of override authority from among: unilateral, negotiated, suggestive, and none.

**14.** The system (100) of any of claims 11 to 13, wherein the contextual input data regarding the uncrewed vehicle comprises:

sensor data from sensors on board the uncrewed vehicle;
environmental information regarding an area of operation of the uncrewed vehicle; and
human status data regarding the remote controller (103); and, optionally,
wherein the human status data regarding the remote controller (103) comprises eye tracking data regarding a human controller.

**15.** A computer program comprising computer program instructions that, when executed by at least one electronic

processor cause the at least one electronic processor to perform the method of any of claims 1 to 10, or a computer-readable medium having stored thereon such a computer program.

110
106
REQUIREMENTS DATABASE
107
MODE OF AUTONOMY SELECTION TABLE
164
166
153
105
104
OTHER CONTEXTUAL INPUT DATA SOURCES
108
161
SYSTEM AND ENVIRONMENT MONITOR
DECISION ENGINE
168
151
152
102
101
101
103
100

FIG. 1

OBTAIN CONTEXTUAL INPUT DATA
202
PREDICT FUTURE STATUSES OF OPERATIONAL PARAMETERS
204
DETERMINE FUTURE AUTONOMY MODE FOR A FUNCTION
206
IMPLEMENT FUTURE AUTONOMY MODE
208
EXECUTE FUNCTION
210
200

FIG. 2

304
302
MEMORY
PROCESSOR
308
306
STORAGE
RF TRANSCEIVER
300
312
330
320
322

FIG. 3

Europäisches
Patentamt
European
Patent Office
Office européen
des brevets

# EUROPEAN SEARCH REPORT

Application Number
EP 26 15 6863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO ZHE ET AL: "Adaptive level of autonomy for human-UAVs collaborative surveillance using situated fuzzy cognitive maps", CHINESE JOURNAL OF AERONAUTICS, ELSEVIER, AMSTERDAM, NL, vol. 33, no. 11, 25 June 2020 (2020-06-25), pages 2835-2850, XP086388626, ISSN: 1000-9361, DOI: 10.1016/J.CJA.2020.03.031 [retrieved on 2020-06-25] | 1-3,5-8, 11-15 | INV. G05D1/227 G05D107/13 G05D109/20 G08G5/55 |
| A | * abstract; figures 5-6; tables 1,2 * * page 2836, right-hand column, paragraph 1 * * page 2838 - page 2839, left-hand column * * page 2840, paragraph 5.1 - page 2841, paragraph 5.2 * * page 2848, right-hand column, paragraph 9 * ----- | 4,9,10 | |
| A | Yutko Brian: "Concept of Operations for Uncrewed Urban Air Mobility", , 1 December 2023 (2023-12-01), XP093372719, Retrieved from the Internet: URL:https://www.boeing.com/content/dam/boeing/boeingdotcom/innovation/con-ops/docs/Concept-of-Operations-for-Uncrewed-Urban-Air-Mobility.pdf [retrieved on 2026-03-03] * page 23, paragraph 3.1.6 * * page 24, paragraph 3.2 * ----- | 1-15 | TECHNICAL FIELDS SEARCHED (IPC) G05D |

The present search report has been drawn up for all claims

1

| Place of search | Date of completion of the search | Examiner |
|---|---|---|
| Munich | 3 March 2026 | Mallet, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)